# EUROPÄISCHE PATENTSCHRIFT

(11) **EP 0 948 555 B1**
(45) Veröffentlichungstag und Bekanntmachung des Hinweises auf die Patenterteilung: **28.06.2000**
(21) Anmeldenummer: 97954756.9
(22) Anmeldetag: 24.12.1997
(51) Int. Cl.: C08G 77/36

(54) **VERFAHREN ZUR FRAKTIONIERUNG VISCOSER SILICONE**
PROCESS FOR FRACTIONATING VISCOUS SILICONES
PROCEDE POUR FRACTIONNER DES SILICONES VISQUEUX

(30) Priorität: 27.12.1996 DE 19654488
(43) Veröffentlichungstag der Anmeldung: 13.10.1999
(73) Patentinhaber: SKW Trostberg Aktiengesellschaft, 83308 Trostberg (DE)
(72) Erfinder: HEIDLAS, Jürgen, D-83308 Trostberg (DE); VON SEYERL, Joachim, D-83370 Seeon (DE)
(74) Vertreter: Böhm, Brigitte, Dipl.-Chem. Dr.
(86) Internationale Anmeldenummer: EP9707301
(87) Internationale Veröffentlichungsnummer: WO9829474

(56) Entgegenhaltungen:
- EP-A- 0 493 879
- ELSBERND, C. SENGER ET AL.: "The Application of Supercritical Fluids in the Fractionation and Characterization of Siloxane Oligomers and Graft Copolymers" POLYMER PREPRINTS, Bd. 31, Nr. 1, 1990, Seiten 673-674, XP002062289

## Beschreibung

Gegenstand der vorliegenden Erfindung ist ein Verfahren zur Fraktionierung viscoser Silicone mit verdichteten gasförmigen Kohlenwasserstoffen sowie die erhaltenen fraktionierten viscosen Silikone.

Der Begriff "viscose Silicone" ist dabei so zu verstehen, dass er sowohl Siliconöle umfasst als auch Siliconpolymere, deren Vernetzungsgrad noch gewisse viscose Eigenschaften zuläßt oder die gemäß dem erfindungsgemäßen Verfahren in den viskosen (pumpfähigen) Zustand gebracht werden können.

Silicone oder Silicon-Kautschuksysteme haben in den letzten Jahrzehnten zahlreiche Anwendungsgebiete erobert und erfüllen in den typischen Bereichen Formenbau, Medizintechnik, Dentalsektor, Elektroinstallation und Lederindustrie, aber auch im Haushalts- und Hobbybereich aufgrund ihrer bislang unübertroffenen Eigenschaften ihre vielfältigen Zwecke.

Silicone lassen sich auf ihre polymeren oder ölartigen Hauptbestandteile (viscose Silicone) zurückführen, denen durch das Zumischen von Vernetzern, Katalysatoren, Füllstoffen, Pigmenten und anderen Hilfsmitteln die typischen Eigenschaften verliehen werden. Die Hauptbestandteile weisen das für Silicone typische Silicium-Sauerstoffgerüst auf, bei dem organische Reste wie Methyl- aber auch Phenylgruppen an das Siliciumatom gebunden sind. Die Kettenlänge wirkt sich direkt auf die Viskosität des Polymers oder der Öle aus und kann Werte bis über 10 000 annehmen; die Anzahl und Art der Substituenten, die neben den Methyl- und Phenylgruppen in das Kettenmolekül eingebaut sind, bestimmen wesentlich die hervorragenden Eigenschaften wie Elastizität, Temperatur- und Lösemittelbeständigkeit, Gasdurchlässigkeitoder Strahlungsunempfindlichkeit. Die Vernetzungsreaktionen der oben genannten Grundmischungen folgen in der Praxis im wesentlichen den zwei Prinzipien der Additions- und der Kondensationsvernetzung. Beide Reaktionstypen resultieren in einer sehr gezielt steuerbaren dreidimensionalen Vernetzung mit einem genau einstellbaren Elastizitätsgrad.

Die Synthese der viscosen Silicone erfolgt noch immer nach dem Rochow-Prozeß, bei dem Silicium unter Katalysatoreinwirkung mit Methylchlorid im wesentlichen zum Dimethylsilyldichlorid sowie in geringen Anteilen zu Trimethylsilylmonochlorid und Monomethylsilyltrichlorid umgesetzt wird. Über eine Methanolyse dieser Zwischenprodukte zu den entsprechenden Silanolen gelangt man schließlich zu den gewünschten Siloxanen, die sowohl cyclisch als auch linear sein können. Für die genannten Anwendungsbereiche ist das cyclische sogenannte " D4"-Siloxan das derzeit wichtigste Ausgangsprodukt. Dieses wird in der Regel unter Hydrolyse durch eine ringförmige Polymerisation in spezielle langkettige Öle, beispielsweise Baysilone®-Öle der Bayer-AG, umgewandelt. Die cyclischen Oligomere werden durch die Anzahl ihrer monomeren Ringglieder, also z. B. D3, D4, D20, charakterisiert, was eine Aussage über die Größe der Oligomerenringe erlaubt.

Das Problem bei der geschilderten Hydrolyse besteht allerdings darin, dass es sich um eine Gleichgewichtsreaktion handelt, bei der cyclische Verbindungen vom Typ D4, aber auch D3, DS oder D6, in Anteilen von ca. 12 bis 18 Gew-% im Rohöl verbleiben, was sowohl die Eigenschaften, aber auch und vor allem die Qualitätsmerkmale dieser für die Kautschuksysteme wichtigsten Hauptbestandteile negativ beeinflusst.

Bislang erfolgt die Aufreinigung der viscosen Silicone, also die Entfernung dieser cyclischen Oligomere, durch eine mehrstündige Vakuumausheizung bei ca. 200 °C, wodurch der Anteil an flüchtigen Bestandteilen auf unter 0,5 % gesenkt werden kann. Höhergliedrige Ringe (D > 10) sind mit dieser Methode aber nicht zu entfernen und verbleiben mit bis zu 2 bis 3 % in den Ausgangsprodukten.

Das Problem besteht nun allerdings darin, dass für verschiedene, z. T. sehr spezielle Anwendungen der Silicon-Kautschuksysteme deutlich niedrigere Flüchtigenanteile von < 0,1 % gefordert werden. Als Beispiele für solche Anwendungsbereiche sind Kabelstecker genannt, wo die zwingend vorgeschriebenen Widerstandsmessungen nur sehr geringe Flüchtigenanteile tolerieren, oder auch der Bereich der technischen Teilefertigung und der sog. "Lebensmittelöle", oder der Flüssigsilicon-Bauteilemarkt.

In der Vergangenheit wurde zwar versucht, die unerwünschten cyclischen Oligomere aus Polydimethylsiloxanen mit überkritischem Kohlendioxid zu entfernen ("Processing of Polymers with Supercritical Fluids", V. Krukonis; Polymer News, 1985, Vol. 11, 7-16), doch blieben die Ergebnisse aufgrund der wenig lipophilen und polaren Eigenschaften von verdichtetem CO₂ und trotz der zur Erlangung einer akzeptablen Löslichkeit notwendigen technischen Voraussetzungen (z. B. hohe Drücke) hinter den Erwartungen zurück.

In Polymer Preprints Vol. 31, Nr. 1, 1990, S. 673-674 ist u.a. ein Verfahren zur Fraktionierung von Polymeren und insbesondere von Diorganosiloxanen mit überkritischem Ethan als Extraktionsmedium beschrieben. Als Nachteil bei der Verwendung von Ethan als überkritischem Extraktionsmittel muß gesehen werden, daß damit meist ein großer sicherheitstechnischer Aufwand verbunden ist, und daß die erforderliche Prozeßwirtschaftlichkeit aufgrund der geringen Gasbeladung des Ethans meist nicht gegeben ist, was einer Umsetzung in den großtechnischen Maßstab entgegensteht. Weitere Kohlenwasserstoffe sind als Extraktionsmittel für Diorganosiloxane nicht offenbart oder nahegelegt.

Aus den beschriebenen Nachteilen des Standes der Technik hat sich daher die Aufgabe gestellt, ein Verfahren zur Fraktionierung viscoser Silicone mit verdichteten Gasen zu entwickeln, mit dem es in vorteilhafter Weise möglich ist, die unerwünschten cyclischen Oligomeranteile auf tolerierbare Werte zu senken.

Diese Aufgabe wurde erfindungsgemäß dadurch gelöst, daß man die Fraktionierung mit einem verdichteten gasförmigen Kohlenwasserstoff mit 3 bis 4 C-Atomen bei Verfahrenstemperaturen zwischen 25 und 250°C und Verfahrensdrücken zwischen 20 und 500 bar durchführt, wobei das Gas mit einer Dichte > 160 kg/m³ eingesetzt wird.

Überraschend hat sich in der Praxis gezeigt, dass sich mit diesem Verfahren der Gesamtanteil an cyclischen Oligomeren bis D20 sogar weit unter die geforderte Menge von 0,1 Gew.-% senken lässt und es über diese bloße Aufreinigung der viscosen Silicone hinaus sogar möglich ist, durch eine gezielte Fraktionierung neue Qualitäten von polymeren Siliconen und Silikonölen zu erhalten, was alleine aufgrund der Aufgabenstellung nicht zu erwarten war.

Als Ausgangsmaterial für das vorliegende Verfahren werden erfindungsgemäß ölartige und/oder polymere Diorganosilicone mit einer Kettenlänge zwischen 2 und 10 000 eingesetzt, die auch substituiert sein können. Vorzugsweise werden Polydimethylsilicone, Polymethylphenylsilicone, Polydiphenylsilicone und organohalogensubstituierte Silicone, insbesondere Polyorganofluorsilicone, sowie deren Mischungen eingesetzt. Nach dieser Festlegung sind also alle bislang für die technische Praxis relevanten homogenen oder heterogenen, kettenförmigen oder quervernetzten polydispersen Silicone für das Verfahren geeignet; die Substituentenverteilung kann dabei geordnet oder randomisiert vorliegen und die Molekulargewichtsverteilung der Öle und Polymere kann völlig beliebig sein, was den Anwendungsbereich des Verfahrens zusätzlich vergrößert.

Als Extraktionsmedien dienen die verdichteten gasförmigen Kohlenwasserstoffe Propan und n- oder i-Butan sowie deren Mischungen, die sich aufgrund ihrer lipophilen Eigenschaften für den vorgesehen Anwendungsbereich als besonders geeignet erwiesen haben. Die höhermolekularen Bestandteile der Ausgangsmaterialien sind in den genannten Extraktionsmedien unter den erfindungsgemäßen Bedingungen unlöslich, die niedermolekularen flüchtigen Bestandteile aber sehr gut löslich. Dennoch hat es sich in speziellen Fällen als sehr zweckdienlich erwiesen, wenn bspw. aus Kostengründen eine erfindungsgemäße Mischung aus Propan und maximal 25 Gew% Butan oder aus verfahrenstechnischen Gründen Propan mit einem Anteil bis maximal 50 Gew% Dimethylether eingesetzt wird, der in diesem Fall als Schleppmittel fungiert.

Die Fraktionierung wird gemäß vorliegender Erfindung kontinuierlich in einer Extraktionskolonne und dem Gegenstromprinzip folgend durchgeführt. In Fällen, in denen die Fraktionierung an einem Ausgangsmaterial vorgenommen werden soll, das als Halbzeug und/oder geformtes Produkt vorliegt (gemeint sind Kabelisolierungen, Stecker, plastische Formteile für medizinische Anwendungen usw.) kann das Verfahren zwar auch batchweise durchgeführt werden, doch limitiert die Tatsache, dass das Ausgangsmaterial für den Fraktioniervorgang eine gewisse Mindestviskosität aufweisen muss, den breiten Batcheinsatz.

Über die Einstellung der Gasdichte durch die Wahl der Verfahrensparameter Druck und Temperatur im erfindungsgemäßen Bereich kann das Ausgangsmaterial in ein Sumpf- und Kopfprodukt fraktioniert werden. Der Verfahrensdruck und die Verfahrenstemperatur (die die Gasdichte festlegen) richten sich zum einen nach der Art des Ausgangsmaterials und zum anderen nach dem angestrebten Ziel und der Mengenverteilung der Fraktionierung. Die Fraktionierung kann verfahrenstechnisch gut gesteuert werden, indem z. B. bei konstantem Verfahrensdruck eine Erhöhung der Verfahrenstemperatur zu einer Erniedrigung des Kopf-/Sumpfprodukt-Verhältnisses führt und umgekehrt.

Zur besseren Auftrennung der Ausgangsmaterialien in ein Kopf- und ein Sumpfprodukt hat es sich erfindungsgemäß als günstig erwiesen, an die Extraktionskolonne einen zum Kopf hin ansteigenden Temperaturgradienten anzulegen, der sich in der Größenordnung von maximal 20°C bewegen sollte; damit können die in vielen Fällen unerwünschten cyclischen Oligomere als Kopfprodukte isoliert werden, die gereinigten viscosen Silicone sammeln sich mit nur sehr geringen Verlusten als Sumpfprodukt.

Das Verfahren kann nach dem oben genannten Prinzip vielseitig für die Fraktionierung von viscosen Siliconen eingesetzt werden. Prinzipiell läßt sich das Ausgangsmaterial stets beliebig in ein Kopfprodukt mit geringer Viskosität und niedrigerem Polymerisationsgrad und ein Sumpfprodukt mit höherer Viskosität und höherem Polymerisationsgrad aufteilen. Allen Fraktionierungen ist demnach gleich, daß die cyclischen Oligomere in das Kopfprodukt geführt werden. Bei der industriellen Nutzung des Verfahrens besteht prinzipiell die Möglichkeit, mehrere Fraktionierungskolonnen in Serie zu schalten, um damit mehrere gezielte Siliconfraktionen in einem Prozeß gewinnen zu können.

Wie bereits im Hinblick auf die batchweise Verfahrensvariante ausgeführt, ist eine gewisse Mindestviskosität der Ausgangsmaterialien für den Erfolg des vorliegenden Fraktionierungsverfahrens notwendig. In Fällen, in denen die Viskositäten der Ausgangsmaterialien nicht ausreichen, hat es sich deshalb als durchaus sinnvoll erwiesen, wenn den jeweiligen Ölen oder Polymeren vor der eigentlichen Fraktionierung zum Zweck der Viskositätserniedrigung ein organisches Lösemittel in Mengen von 1 bis 50 Gew% zugesetzt wird. Dieses Lösemittel entstammt erfindungsgemäß der Reihe der n- oder i-Alkane mit 5 bis 8 Kohlenstoffatomen, kurzkettigen Ketone mit 1 bis 5 Kohlenstoffatomen, vorzugsweise Aceton oder Butanon-2, oder kurzkettigen primären oder sekundären Alkoholen mit 1 bis 4 Kohlenstoffatomen. In diesem Fall sieht die vorliegende Erfindung vor, das jeweilige organische Lösemittel aus dem Kopfprodukt wieder zu gewinnen; damit ist zum einen ein ressoursenschonendes Arbeiten möglich, zum anderen werden in Fällen, in denen auch die im Kopfprodukt angereicherten Oligomeren als qualitativ hochstehendes Produkt anzusehen sind, diese durch verbliebene Lösemittelreste nicht qualitativ negativ beeinflusst. Die Viskositätserniedrigung der Ausgangsmaterialien kann auch dadurch erreicht werden, dass die Ausgangsmaterialien wiederum vor der Fraktionierung in 1 bis 85 Gew% des verdichteten Gas(gemisch)es gelöst werden.

Die vielseitige Anwendbarkeit des vorliegenden Verfahrens zeigt sich nicht zuletzt darin, dass mit dem erfindungsgemäßen Fraktionierungsverfahren viscose Silicone gewonnen werden können, die eine Kettenlänge von 200 bis 10 000 aufweisen, oder viscose Silicone mit einer Viskosität von 100 bis 500 000 mPas. Das Erreichen der Viskosität von 500 000 ist um so erstaunlicher, als in diesem Viskositätsbereich die Silicone fast keine freien Fließeigenschaften mehr aufweisen und sich hinsichtlich ihrer Fraktioniereigenschaften den Feststoffen annähern.

In jedem Fall können mit diesem Verfahren fraktionierte viscose Silicone als Sumpfprodukte gewonnen werden, die gemäß Erfindung einen Gesamtoligomerengehalt D4 bis D20 aufweisen, der unter 0,05 Gew.-% liegt. Dabei wird die Obergrenze des Gesamtoligomerengehalts natürlich ausschließlich von der Wirtschaftlichkeit des Verfahrens vorgegeben.

Die nachfolgenden Beispiele veranschaulichen die Vorteile des erfindungsgemäßen Verfahrens:

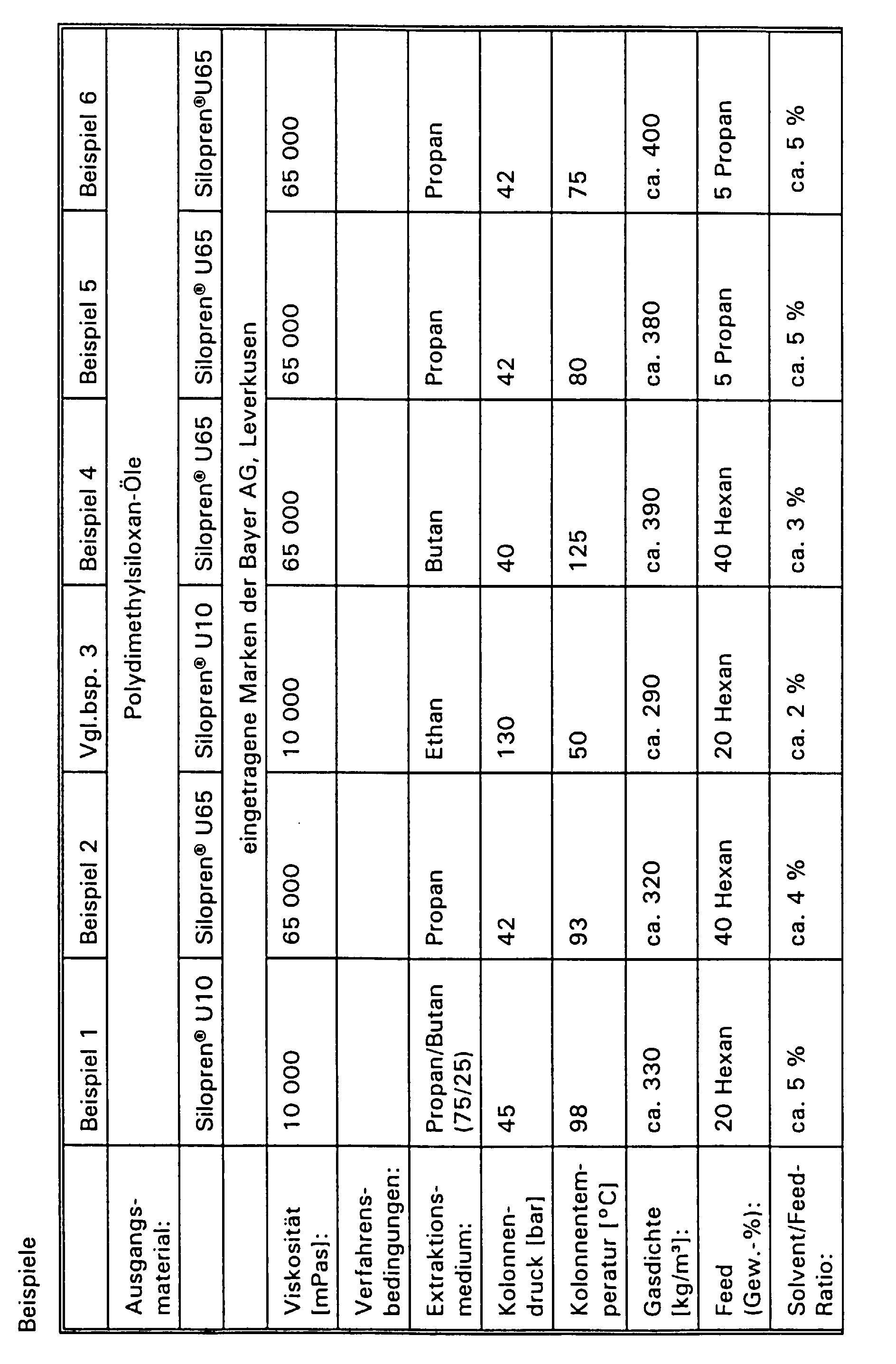

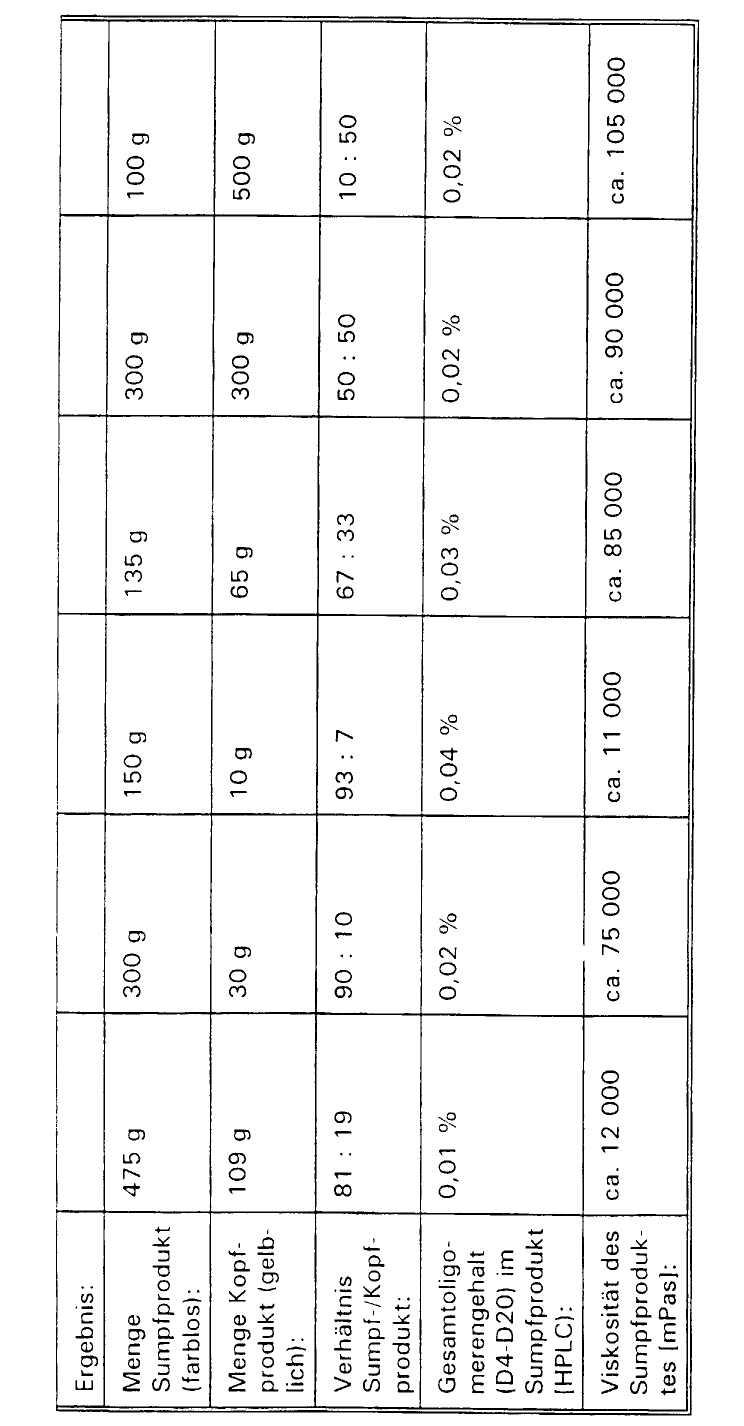

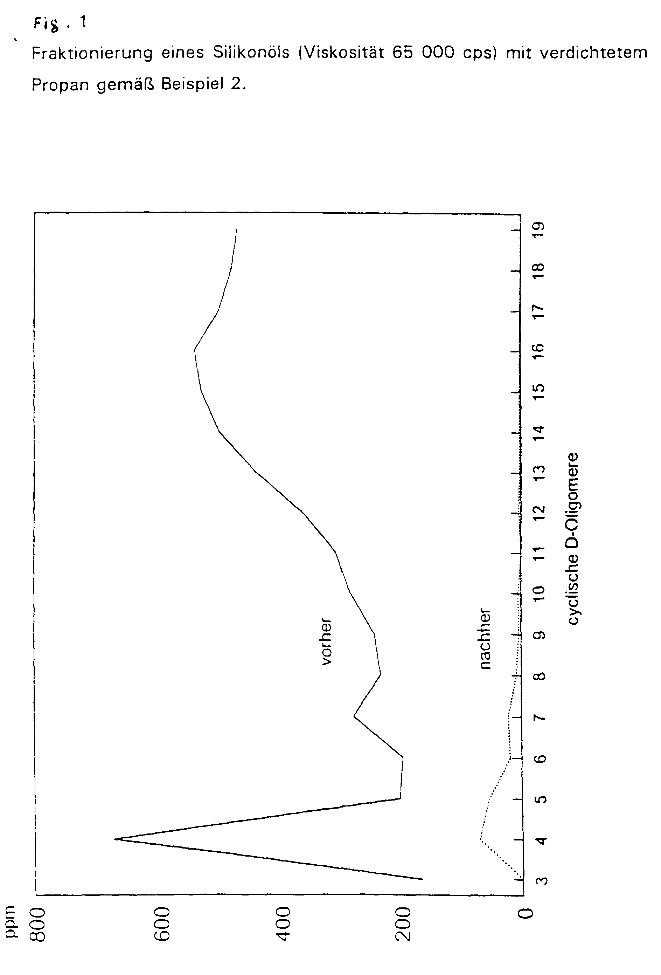

Abb. 1 veranschaulicht die Abnahme der cyclischen D4 - D20-Oligomeren durch die erfindungsgemäße Fratkionierung des Ausgangsmaterials von Beispiel 2.

## Patentansprüche

1. Verfahren zur Fraktionierung ölartiger und polymerer ggf. substituierter Diorganosilicone mit einer Kettenlänge zwischen 2 und 10.000 mit verdichteten Gasen, **dadurch gekennzeichnet**, daß man die Fraktionierung mit einem verdichteten gasförmigen Kohlenwasserstoff mit 3 oder 4 C-Atomen bei Verfahrenstemperaturen zwischen 25 und 250°C und Verfahrensdrücken zwischen 20 und 500 bar durchführt, wobei das Gas mit einer Dichte > 160 kg/m³ eingesetzt wird.

2. Verfahren nach Anspruch 1, **dadurch gekennzeichnet**, dass als Ausgangsmaterial Polydimethylsilicone, Polymethylphenylsilicone, Polydiphenylsilicone und organohalogensubstituierte Silicone, insbesondere Polyorganofluorsilicone, und deren Mischungen eingesetzt werden.

3. Verfahren nach Anspruch 1 oder 2, **dadurch gekennzeichnet**, dass als verdichteter gasförmiger Kohlenwasserstoff Propan, n- oder i-Butan oder deren Mischungen verwendet werden.

4. Verfahren nach Anspruch 3, **dadurch gekennzeichnet**, dass die Mischung aus Propan und maximal 25 Gew.-% Butan besteht.

5. Verfahren nach Anspruch 3, **dadurch gekennzeichnet**, dass Propan mit einem Anteil bis maximal 50 Gew.-% Dimethylether eingesetzt wird.

6. Verfahren nach den Ansprüchen 1 bis 5, **dadurch gekennzeichnet**, dass die Fraktionierung kontinuierlich in einer Extraktionskolonne durchgeführt wird.

7. Verfahren nach den Ansprüchen 1 bis 6, **dadurch gekennzeichnet**, dass die Fraktionierung dem Gegenstromprinzip folgt.

8. Verfahren nach den Ansprüchen 1 bis 7, **dadurch gekennzeichnet**, dass an die Extraktionskolonne ein zum Kolonnenkopf hin ansteigender Temperaturgradient angelegt wird.

9. Verfahren nach den Ansprüchen 1 bis 8, **dadurch gekennzeichnet**, dass den Ausgangsmaterialien vor der Fraktionierung zur Viskositätserniedrigung ein organisches Lösemittel aus der Reihe der verzweigten oder unverzweigten n- oder i-Alkane mit 5 bis 8 Kohlenstoffatomen, kurzkettigen Ketone mit 1 bis 5 Kohlenstoffatomen, vorzugsweise Aceton oder Butanon-2, und kurzkettigen primären oder sekundären Alkoholen mit 1 bis 4 Kohlenstoffatomen in Mengen von 1 bis 50 Gew.-% zugesetzt wird.

10. Verfahren nach Anspruch 9, **dadurch gekennzeichnet**, dass das organische Lösemittel aus dem Kopfprodukt wiedergewonnen wird.

11. Verfahren nach den Ansprüchen 1 bis 8, **dadurch gekennzeichnet**, dass die Ausgangsmaterialien vor der Fraktionierung zur Viskositätserniedrigung in 1 bis 85 Gew.-% des verdichteten Gas(-gemisch)es gelöst werden.

12. Fraktionierte ölartige und polymere gegebenenfalls substituierte Silicone, hergestellt nach den Ansprüchen 1 bis 11, **dadurch gekennzeichnet**, dass sie eine Kettenlänge von 200 bis 10 000 und einen Gesamtoligomerengehalt D4 bis D20 < 0,05 Gew.-% aufweisen.

13. Fraktionierte ölartige und polymere gegebenenfalls substituierte Silicone, hergestellt nach den Ansprüchen 1 bis 11, **dadurch** **gekennzeichnet**, dass sie eine Viskosität von 100 bis 500 000 mPas und einen Gesamtoligomerengehalt D4 bis D20 < 0,05 Gew.-% aufweisen.

## Claims

1. A process for the fractionation of oily and polymeric diorganosilicones, which have a chain length of between 2 and 10 000 and may be substituted, with compressed gases, **characterized in that** the fractionation is conducted with a compressed, gaseous hydrocarbon having 3 or 4 carbon atoms at processing temperatures of between 25 and 250 °C and under processing pressures of between 20 and 500 bar, the gas having a density of > 160 kg/m³.

2. The process of claim 1, **characterized in that** as starting material, polydimethyl silicones, polymethylphenyl silicones, polydiphenyl silicones and silicones substituted with organohalides, especially polyorganofluorosilicones, are used, and mixtures thereof.

3. The process of claim 1 or 2, **characterized in that** as compressed, gaseous hydrocarbon, propane, n- or i-butane or mixtures thereof are used.

4. The process of claim 3, **characterized in that** the mixture consists of propane and a maximum of 25 wt. % butane.

5. The process of claim 3, **characterized in that** propane together with a maximum proportion of 50 wt. % dimethyl ether is used.

6. The process of claims 1 to 5, **characterized in that** the fractionation is carried out continuously in an extraction column.

7. The process of claims 1 to 6, **characterized in that** the fractionation is conducted according to the countercurrent principle.

8. The process of claims 1 to 7, **characterized in that** a temperature gradient is applied to the extraction column, with the temperature increasing towards the top of the column.

9. The process of claims 1 to 8, **characterized in that** prior to the fractionation, an organic solvent is added to the starting materials in order to lower their viscosity, said solvent being added in an amount of 1 to 50 wt. % and being selected from the branched or unbranched n- or i-alkane series with 5 to 8 carbon atoms, the short-chain ketone series with 1 to 5 carbon atoms, preferably acetone or butanone-2, or the short-chain, primary or secondary alcohol series with 1 to 4 carbon atoms.

10. The process of claim 9, **characterized in that** the organic solvent is recovered from the top product.

11. The process of claims 1 to 8, **characterized in that** prior to the fractionation, the starting materials are dissolved in 1 to 85 wt. % of the compressed gas (mixture) in order to reduce their viscosity.

12. Fractionated oily and polymeric silicones, which may be substituted and are produced according to claims 1 to 11, **characterized in having** a chain length of 200 to 10 000 and a total oligomer content D4 to D20 < 0.05 wt. %.

13. Fractionated oily and polymeric silicones, which may be substituted and are produced according to claims 1 to 11, **characterized in having** a viscosity of 100 to 500 000 mPas and a total oligomer content D4 to D20 < 0.05 wt.%.

## Revendications

1. Procédé pour fractionner des diorganosilicones huileuses et polymères, éventuellement substituées ayant une longueur de chaîne entre 2 et 10000 avec des gaz comprimés, caractérisé en ce que l'on effectue le fractionnement avec un hydrocarbure gazeux comprimé avec 3 ou 4 atomes C à des températures de procédé entre 25 et 250°C et à des pressions de procédé entre 20 et 500 bars, le gaz étant mis en oeuvre à une densité > 160 kg/m³.

2. Procédé selon la revendication 1, caractérisé en ce qu'en tant que matériaux de départ, on utilise des polydiméthylsilicones, des polyméthylphénylsilicones, des polydiphénylsilicones, et des silicones organohalogénosubstituées, en particulier des polyorganofluorosilicones et leurs mélanges.

3. Procédé selon la revendication 1 ou 2, caractérisé en ce qu'en tant qu'hydrocarbures gazeux comprimés on utilise du propane, du n- ou i- butane ou leurs mélanges.

4. Procédé selon la revendication 3, caractérisé en ce que le mélange consiste en du propane et au maximum 25% en poids de butane.

5. Procédé selon la revendication 3, caractérisé en ce que le propane est mis en oeuvre avec une quantité jusqu'à 50% en poids maximum de diméthyléther.

6. Procédé selon les revendications 1 à 5, caractérisé en ce que fractionnement est conduit de façon continue dans une colonne d'extraction.

7. Procédé selon les revendications 1 à 6, caractérisé en ce que le fractionnement s'effectue selon le principe à contre-courant.

8. Procédé selon les revendications 1 à 7, caractérisé en ce que sur la colonne d'extraction on applique un gradient de température ascendant jusqu'à la tête de colonne.

9. Procédé selon les revendications 1 à 8, caractérisé en ce qu'aux matériaux de départ avant le fractionnement pour abaisser la viscosité on ajoute un solvant organique à partir de la série des n- ou i- alcanes ramifiés ou non ramifiés avec 5 à 8 atomes de carbone, des cétones à chaîne courte avec 1 à 5 atomes de carbone, de préférence de la cétone ou butanone-2, et des alcools primaires ou secondaires à chaîne courte avec 1 à 4 atomes de carbone dans des quantités de 1 à 50% en poids.

10. Procédé selon la revendication 9, caractérisé en ce que le solvant organique est récupéré à partir du produit de tête.

11. Procédé selon les revendications 1 à 8, caractérisé en ce que les matériaux de départ sont dissous avant le fractionnement pour réduire la viscosité dans 1 jusqu'à 85% en poids du mélange gazeux comprimé.

12. Silicones fractionnées huileuses et polymères éventuellement substituées, préparées selon les revendications 1 à 12, caractérisées en ce qu'elles présentent une longueur de chaîne de 200 à 10000 et une teneur globale en oligomère D4 à D20 < 0,05% en poids.

13. Silicones fractionnées huileuses et polymères, éventuellement substituées selon les revendications 1 à 11, caractérisées en ce qu'elles présentent une viscosité de 100 à 500000 mPas et une teneur globale en oligomère D4 à D20 < 0,05 % en poids.
